# EUROPEAN PATENT SPECIFICATION

(11) **EP 2 216 228 B1**
(45) Date of publication and mention of the grant of the patent: **03.05.2017**
(21) Application number: 08857057.7
(22) Date of filing: 05.12.2008
(51) Int. Cl.: B61F 5/22, F16F 9/20, F16F 9/49

(54) **VEHICLE BODY TILTING DEVICE FOR RAILROAD VEHICLE**
FAHRZEUGKAROSSERIE-KIPPVORRICHTUNG FÜR EIN SCHIENENFAHRZEUG
DISPOSITIF D'INCLINAISON DE CAISSE DE VÉHICULE POUR VÉHICULE FERROVIAIRE

(30) Priority: 06.12.2007 JP 2007315569; 06.12.2007 JP 2007315570
(43) Date of publication of application: 11.08.2010
(73) Proprietor: KYB Corporation, Tokyo 105-6111 (JP); RAILWAY TECHNICAL RESEARCH INSTITUTE, Kokubunji-shi, Tokyo 185-8540 (JP)
(72) Inventor: ITO, Tatsuo, Tokyo 105-6111 (JP); UCHIDA, Masaru, Tokyo 105-6111 (JP); KAMOSHITA, Shogo, Kokubunji-shi Tokyo 185-8540 (JP); KAZATO, Akihito, Kokubunji-shi Tokyo 185-8540 (JP)
(74) Representative: Grünecker Patent- und Rechtsanwälte PartG mbB
(86) International application number: PCT/JP2008/072588
(87) International publication number: WO 2009/072672

(56) References cited:
- WO-A1-96/31385
- JP-A- 2002 114 144
- JP-A- 2003 137 091
- JP-A- 2004 291 897
- JP-A- 2008 247 335

## Description

### FIELD OF THE INVENTION

This invention relates to a vehicle body tilting device that tilts a vehicle body of a railway vehicle in a vehicle transverse direction relative to a bogie using an actuator interposed between the vehicle body and the bogie.

### BACKGROUND OF THE INVENTION

When a railway vehicle runs along a curved section, centrifugal force acts on a vehicle body in an opposite direction to a center of curvature of the curved section. This centrifugal force increases as a traveling speed of the vehicle increases. To alleviate the action of this centrifugal force and improve the speed of the railway vehicle while traveling along a curve, a difference of elevation known as a cant is provided on a track of the railway vehicle between an inside rail on the center of curvature side and an outside rail on the opposite side.

The cant is fixed and cannot be modified according to conditions. When railway vehicles travel along a fixed cant at different traveling speeds, the cant becomes steadily less sufficient as the traveling speed of the vehicle increases. When the cant is insufficient, a large centrifugal force acts on the railway vehicle, leading to a reduction in the passenger comfort of the vehicle.

To compensate for an insufficient cant, a vehicle body tilting device that tilts the vehicle body in a lateral direction relative to a bogie is available. When the railway vehicle travels along a curved section, the vehicle body tilting device is activated as necessary to tilt the vehicle body toward the center of curvature side relative to the bogie, thereby compensating for the insufficient cant, improving the passenger comfort of the vehicle, and enabling high-speed travel along the curved section.

In the vehicle body tilting device, for example, a linear actuator driven by air pressure is interposed between the vehicle body, which is supported on the bogie via a pendulum beam, and the bogie, and the vehicle body is tilted relative to the bogie by causing the actuator to elongate and contract.

Meanwhile, the passenger comfort of the vehicle also deteriorates when the vehicle body is tilted relative to the bogie on a cant even though the vehicle speed is low and there is no need to tilt the vehicle body. In response to this problem, a technique of interposing an inhibiting cylinder between the vehicle body and the bogie is known. When there is no need to tilt the vehicle body, the incline of the vehicle body relative to the bogie is locked by the inhibiting cylinder.

When a railway vehicle including this vehicle body tilting device travels along snow-covered ground, elongation and contraction of the actuator and the inhibiting cylinder may be impaired by ice attached to the actuator and inhibiting cylinder or snow compressed into movable parts thereof.

To prevent operational defects in a vehicle body tilting device caused by snow and ice, JPH08-268275A, published by the Japan Patent Office in 1996, proposes accommodating the actuator and the inhibiting cylinder in the hollow pendulum beam. The document WO 96/31385 A1 discloses a vehicle body tilting device according to the preamble of claim 1.

Other prior art is known from documents JP 2004 291897 A, JP 2002 114144 A and WO 96/31385 A1.

### SUMMARY OF THE INVENTION

A compressor is typically installed in a railway vehicle, and the vehicle body tilting device uses compressed air from the compressor. In other words, there is no need to generate compressed air in the vehicle body tilting device, and therefore the vehicle body tilting device constituted by the actuator and the inhibiting cylinder can be accommodated in the pendulum beam.

However, an actuator driven by air, which is highly compressible, tends to be deficient in thrust and responsiveness, and it is therefore not easy to realize a target vehicle body tilt angle with a high degree of precision.

This problem does not occur when the actuator is driven using the pressure of an incompressible fluid, such as oil pressure, instead of air pressure. Since a railway vehicle is not typically installed with an oil pressure source that can be used by the vehicle body tilting device, a dedicated oil pressure source such as a hydraulic pump is required to use a hydraulic vehicle body tilting device. However, when a hydraulic vehicle body tilting device is used, the oil pressure source must also be accommodated in the pendulum beam, which is difficult in terms of space.

It is therefore an object of this invention to provide a small hydraulic vehicle body tilting device that can be accommodated in a pendulum beam.

In order to achieve the above object, this invention provides a vehicle body tilting device for a railway vehicle according to claim 1.

The details as well as other features and advantages of this invention are set forth in the remainder of the specification and are shown in the accompanying drawings.

### BRIEF DESCRIPTION OF THE DRAWINGS

FIG. 1 is a side view of a vehicle body tilting device according to this invention, which is interposed between a vehicle body and a bogie of a railway vehicle.
FIG. 2 is a hydraulic circuit diagram of the vehicle body tilting device.
FIG. 3 is a hydraulic circuit diagram of a vehicle body tilting device according to a second embodiment of this invention.
FIG. 4 is a hydraulic circuit diagram of a vehicle body tilting device according to a third embodiment of this invention.

### DESCRIPTION OF THE PREFERRED EMBODIMENTS

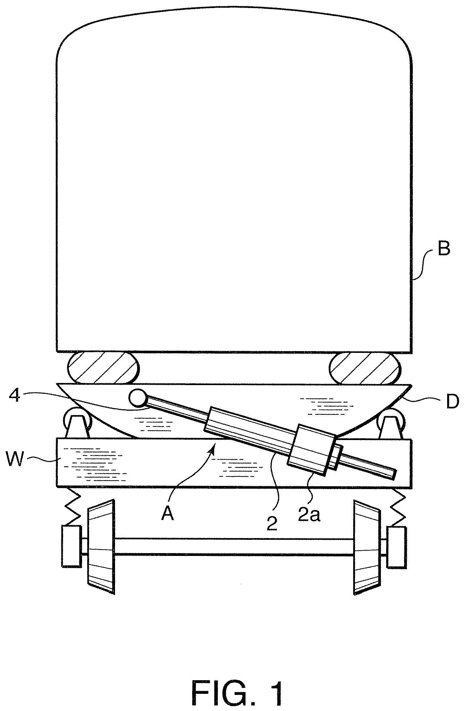

Referring to FIG. 1 of the drawings, a vehicle body B of a railway vehicle is supported relative to a bogie W via a pendulum beam D to be capable of rocking in a lateral direction. An actuator A of a vehicle body tilting device is interposed between the pendulum beam D and the bogie W.

The actuator A is constituted by a double rod linear actuator. A cylinder 2 is joined by a hinge to the bogie W via a bracket 2a. One end of a piston rod 4 is joined by a hinge to the pendulum beam D. Another end of the piston rod 4 is a free end.

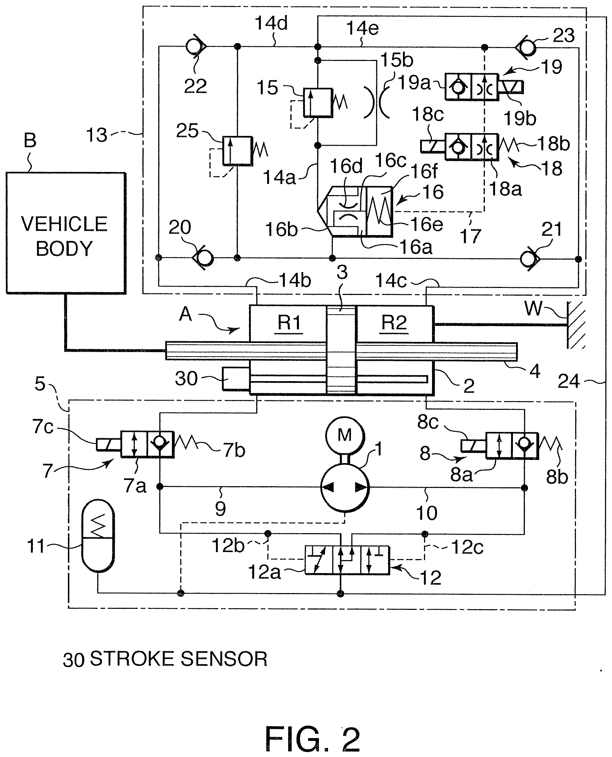

Referring to FIG. 2, the vehicle body tilting device comprises the actuator A, an actuator circuit 5 that supplies oil pressure to the actuator A, and a damping and locking circuit 13 that causes the actuator A to function as a damper and an inhibiting cylinder.

The actuator A comprises a piston 3 accommodated in the cylinder 2 to be free to slide. The piston rod 4 is joined to the piston 3 so as to project from both axial direction sides of the cylinder 2. Two pressure chambers R1 and R2 are defined in the cylinder 2 by the piston 3.

The actuator circuit 5 comprises a bidirectional discharge hydraulic pump 1 driven by an electric motor M, two ports that function as a suction port and a discharge port of the hydraulic pump 1 in accordance with a rotation direction of the hydraulic pump 1, an oil passage 9 connected to one port, and an oil passage 10 connected to the other port. The oil passage 9 is connected to one of the pressure chambers R1 in the cylinder 2 via a solenoid switch valve 7. The oil passage 10 is connected to the other pressure chamber R2 in the cylinder 2 via a solenoid switch valve 8.

One or both of the oil passages 9 and 10 is connected to an accumulator 11 via a low pressure selection valve 12. The accumulator 11 also collects leaked oil pressure leaking from the hydraulic pump 1.

The solenoid switch valve 7 includes a valve main body 7a having a communicating position in which the oil passage 9 communicates with the pressure chamber R1 and a check position in which working oil is allowed to flow from the oil passage 9 into the pressure chamber R1 but prevented from flowing in reverse. The solenoid switch valve 7 includes a spring 7b that biases the valve main body 7a to the check position, and a solenoid 7c that switches the valve main body 7a to the communicating position against the spring 7b through magnetic excitation.

The solenoid switch valve 8 includes a valve main body 8a having a communicating position in which the oil passage 10 communicates with the pressure chamber R2 and a check position in which working oil is allowed to flow from the oil passage 10 into the pressure chamber R2 but prevented from flowing in reverse. The solenoid switch valve 8 includes a spring 8b that biases the valve main body 8a to the check position, and a solenoid 8c that switches the valve main body 8a to the communicating position against the spring 8b through magnetic excitation.

The low pressure selection valve 12 includes a valve main body 12a having a first position in which the oil passage 9 communicates with the accumulator 11, a second position in which the oil passage 10 communicates with the accumulator 11, and a third position in which both the oil passage 9 and the oil passage 10 communicate with the accumulator 11. The low pressure selection valve 12 also includes a pilot passage 12b that applies the pressure of the oil passage 9 to the valve main body 12a to bias the valve main body 12a toward the second position, and a pilot passage 12c that applies the pressure of the oil passage 10 to the valve main body 12a to bias the valve main body 12a toward the first position. In a neutral state, the low pressure selection valve 12 is positioned in the third position.

When the pressure on the oil passage 9 side exceeds the pressure on the oil passage 10 side, the low pressure selection valve 12 switches to the second position such that the oil passage 10 communicates with the accumulator 11. When the pressure on the oil passage 10 side exceeds the pressure on the oil passage 9 side, the low pressure selection valve 12 switches to the first position such that the oil passage 9 communicates with the accumulator 11.

The damping and locking circuit 13 includes a flow passage 14b communicating with the pressure chamber R1 of the cylinder Z, and a flow passage 14c communicating with the pressure chamber R2 of the cylinder Z. The flow passage 14b is connected to a shutoff valve 16 via a check valve 20. The flow passage 14c is connected to the shutoff valve 16 via a check valve 21. The check valves 20 and 21 allow working oil to flow from the flow passages 14b and 14c toward the shutoff valve 16 and prevent working oil from flowing in reverse.

The shutoff valve 16 includes a valve body 16a, a spring 16e that biases the valve body 16a in a closing direction, a valve seat 16b that seats the valve body 16a, a back pressure chamber 16f that applies back pressure to the valve body 16a, a drain passage 17 that releases the back pressure, and a passage 16c having an orifice 16d, which leads oil pressure upstream of the valve seat 16b to the back pressure chamber 16f through the valve body 16a.

A normally open solenoid switch valve 18 and a solenoid switch valve 19 are provided in series in the drain passage 17. The solenoid switch valve 18 includes a valve main body 18a having a communicating position in which the solenoid switch valve 18 communicates with the drain passage 17 via an internal orifice, and a check position in which working oil is allowed to flow from the drain passage 17 into the back pressure chamber 16f but prevented from flowing in reverse. The solenoid switch valve 18 also includes a spring 18b that biases the valve main body 18a toward the communicating position, and a solenoid 18c that switches the valve main body 18a to the check position against the spring 18b through excitation.

The solenoid switch valve 19 is a solenoid two position switch valve which includes a valve main body 19a having a communicating position in which the solenoid switch valve 19 communicates with the drain passage 17 via an internal orifice, and a check position in which working oil is allowed to flow from the drain passage 17 into the back pressure chamber 16f but prevented from flowing in reverse. The solenoid switch valve 19 switches these positions in accordance with selective excitation of a plurality of solenoids 19b. When none of the solenoids 19b is excited, the solenoid switch valve 19 maintains the position obtained through the previous excitation. Instead of the solenoid switch valve 19, any switch valve that is switched by a manual or other operation and has a function for maintaining its last position until a new switch operation is performed may be used.

Instead of the check position, the solenoid switch valves 18 and 19 may be provided with a shutoff position in which the flow of working oil in both directions is completely shut off. The solenoid switch valves 18 and 19 are both constructed to communicate with the drain passage 17 via the internal orifice in the communicating position, but the orifice may be omitted such that the working oil in the drain passage 17 flows freely. The orifice is provided to suppress rapid displacement of the valve body 16a of the shutoff valve 16, thereby preventing noise when the valve body 16a is seated on the valve seat 16b and chattering in the valve body 16a.

When either one of the solenoid switch valves 18 and 19 is in the check position, the back pressure chamber 16f enters an oil lock state, and therefore the valve body 16a of the shutoff valve 16 cannot be lifted. In this case, both the flow passage 14b and the flow passage 14c are shut off from a main flow passage 14a.

When the solenoid switch valves 18 and 19 are both in the communicating position, on the other hand, the valve body 16a is lifted from the valve seat 16b in accordance with the pressure in the flow passage 14b or the flow passage 14c, and as a result, the working oil in the flow passage 14b or the flow passage 14c flows downstream into the main passage 14a.

The main flow passage 14a is provided with a damping valve 15 that varies a flow passage area in accordance with an upstream side pressure, and an orifice 15b for bypassing the damping valve 15. When the upstream pressure is low, the damping valve 15 does not open, and therefore the working oil in the main flow passage 14a flows through the orifice 15b. The damping valve 15 opens when the upstream pressure of the orifice 15b rises above a predetermined cranking pressure due to an increase in flow rate through the main flow passage 14a. When the actuator A functions as a damper, the damping valve 15 and the orifice 15b function as a damping force generating element for generating a damping force by applying resistance to the flow of the main flow passage 14a as the piston rod 4 elongates and contracts.

The main flow passage 14a is connected to the accumulator 11 via a connecting passage 24 downstream of the damping valve 15 and the orifice 15b. The connecting passage 24 is connected to the flow passage 14b via a flow passage 14d and a check valve 22 and to the flow passage 14c via a flow passage 14e and a check valve 23. The check valve 22 functions to allow working oil to flow from the connecting passage 24 into the flow passage 14b and prevent working oil from flowing out of the flow passage 14b into the connecting passage 24. The check valve 23 functions to allow working oil to flow from the connecting passage 24 into the flow passage 14c and prevent working oil from flowing out of the flow passage 14c into the connecting passage 24.

The damping and locking circuit 13 further comprises a relief valve 25 that opens when the flow passage 14b or the flow passage 14c reach or exceed a fixed high pressure to allow the excess pressure to escape into the accumulator 11 through the connecting passage 24.

Using the actuator circuit 5 and the damping and locking circuit 13 constructed as described above, the vehicle body tilting device functions as follows.

When the hydraulic pump 1 is driven to rotate in a direction for supplying oil pressure to the pressure chamber R1 while the solenoid switch valves 7 and 8 are in their respective communicating positions and the shutoff valve 16 is closed, the piston 3 in the cylinder Z is propelled in a rightward direction of FIGs. 1 and 2 by the oil pressure supplied to the pressure chamber R1, and as a result, the piston rod 4 tilts the vehicle body B in a counterclockwise direction of FIG. 1. When the hydraulic pump 1 is driven to rotate in a direction for supplying oil pressure to the pressure chamber R2 while the solenoid switch valves 7 and 8 and the shutoff valve 16 are held in the same state, the piston 3 in the cylinder Z is propelled in a leftward direction of FIGs. 1 and 2 by the oil pressure supplied to the pressure chamber R2, and as a result, the piston rod 4 tilts the vehicle body B in a clockwise direction of FIG. 1. Thus, the vehicle body tilting device functions as an actuator for tilting the vehicle body.

When oil pressure is to be supplied to the pressure chamber R1, the hydraulic pump 1 suctions working oil from the pressure chamber R2, or from the accumulator 11 connected to the oil passage 10 via the low pressure selection valve 12 in the second position, pressurizes the suctioned working oil, and discharges the pressurized working oil into the oil passage 9. When oil pressure is to be supplied to the pressure chamber R2, the hydraulic pump 1 suctions working oil from the pressure chamber R1, or from the accumulator 11 connected to the oil passage 9 via the low pressure selection valve 12 in the first position, pressurizes the suctioned working oil, and discharges the pressurized working oil into the oil passage 10.

When necessary, the accumulator 11 supplies the working oil to be suctioned by the hydraulic pump 1, and therefore, even if a working oil volume in the cylinder 2 decreases due to a temperature decrease or the like, the hydraulic pump 1 can supply oil pressure to the oil chamber R1 or R2 without problems.

The low pressure selection valve 12 switches from the first position to the second position or from the second position to the first position via the third position whenever the orientation of thrust applied to the piston 3 by the hydraulic pump 1 reverses.

The low pressure selection valve 12 is provided to prevent an internal pressure of the cylinder Z from rising excessively due to an increase in the temperature of the working oil, to prevent the internal pressure of the cylinder Z from turning negative due to a reduction in the temperature of the working oil, to compensate for a volume difference between the pressure chamber R1 and the other chamber R2 due to a manufacturing error in the cylinder Z, and so on using the accumulated pressure of the accumulator 11.

The vehicle body tilting device comprises a stroke sensor 30 that detects a stroke position of the piston 3, or in other words displacement of the piston rod 4. An operation of the hydraulic pump 1 is controlled on the basis of the displacement of the piston 3 detected by the stroke sensor 30. More specifically, elongation/contraction of the actuator A is feedback-controlled such that a tilt angle of the vehicle body corresponds to a target tilt angle.

Next, a case in which the solenoid switch valves 7 and 8 are both in their respective check positions and the actuator circuit 5 does not drive the actuator A will be considered.

When the shutoff valve 16 is closed such that the main flow passage 14a is shut off, communication between the pressure chambers R1 and R2 of the cylinder Z is blocked. In this state, the actuator A enters a locked state and functions as an inhibiting cylinder to lock tilting of the vehicle body relative to the bogie.

When the actuator A is forced to elongate and contract by an external force while the shutoff valve 16 is open such that the main flow passage 14a is connected to the pressure chamber R1 or R2, working oil moves into the pressure chamber R2 from the pressure chamber R1 via the flow passage 14b, the main flow passage 14a, and the flow passage 14e. Alternatively, working oil moves into the pressure chamber R1 from the pressure chamber R2 via the flow passage 14c, the main flow passage 14a, and the flow passage 14d. In both cases, the working oil passes through the damping valve 15 or the orifice 15b while generating damping force. In other words, the actuator A elongates and contracts while generating damping force relative to a load of the forcing power of the external force, and therefore the vehicle body tilting device functions as a damper.

When an excessive load is applied to the actuator A in an elongation/ contraction direction regardless of the open/closed state of the shutoff valve 16 such that the internal pressure of the pressure chamber R1 or the pressure chamber R2 becomes abnormally high, the relief valve 25 opens. The relief valve 25 diverts the high internal pressure of the pressure chamber R1 or the pressure chamber R2 through the shutoff valve 16 and the damping valve 15 or the orifice 15b so that the pressure escapes to the low pressure side pressure chamber R2 or R1.

When the volume of the working oil in the actuator A and the damping and locking circuit 13 decreases due to temperature variation or the like, the accumulator 11 provides supplementary working oil to the pressure chamber R1 via the check valve 22 or to the pressure chamber R2 via the check valve 23. Hence, the actuator circuit 5 and the damping and locking circuit 13 include an independent working oil volume compensating circuit.

It should be noted, however, that the actuator circuit 5 and damping and locking circuit 13 do not necessarily have to include an independent working oil volume compensating circuit. For example, the solenoid switch valves 7 and 8 may be provided with a shutoff position, in which the flow of working oil in both directions is completely shut off, instead of the check position. In this case, working oil volume compensation is always performed via the damping and locking circuit 13.

Next, an operation of the vehicle body tilting device having the above construction will be described.

When the railway vehicle is inoperative, for example when the railway vehicle has finished operating and lowered its pantograph, and is parked in a vehicle terminal, power supply to the railway vehicle is interrupted. In this case, the vehicle body tilting device must function as an inhibiting cylinder for preventing the vehicle body from tilting to ensure that the vehicle body is not caused to tilt by a crosswind or the like.

In this case, the solenoid switch valve 19 is switched to the check position before the power supply is interrupted. The normally open solenoid switch valve 18 is set in the communicating position when the power supply is interrupted. As a result, back pressure acting on the valve body 16a of the shutoff valve 16 is locked, and therefore the shutoff valve 16 is held in a closed state. Further, the solenoid switch valves 7 and 8 of the actuator circuit 5 are held in the check position by the springs 7b and 8b, respectively. Hence, the actuator A is maintained in a locked state for preventing elongation/ contraction, and the vehicle body tilting device functions as an inhibiting cylinder that prevents the vehicle body from tilting.

When the pantograph is raised to start an operation of the railway vehicle, the solenoid 19b of the solenoid switch valve 19 is excited such that the solenoid switch valve 19 switches from the check position to the communicating position. After being switched to the communicating position, the solenoid switch valve 19 maintains the communicating position even when excitation of the solenoid 19b is halted.

Once an operation of the railway vehicle has started, the solenoid switch valve 18, the solenoid switch valves 7 and 8, and the hydraulic pump 1 operate as follows in accordance with traveling conditions.

### (1) When vehicle body tilting is unnecessary

When a traveling speed is lower than a predetermined speed of, for example, 50km/hr or the traveling speed is equal to or greater than the predetermined speed but the railway vehicle is traveling in a straight line or along a gentle curve, the vehicle body does not need to be tilted.

In this case, the vehicle body tilting device is used as an inhibiting cylinder. As regards the damping and locking circuit 13, the solenoid 18c of the solenoid switch valve 18 is excited such that the solenoid switch valve 18 is switched to the check position. As a result, working oil outflow from the back pressure chamber 16f that applies back pressure to the valve body 16a of the shutoff valve 16 is blocked, and therefore the shutoff valve 16 is held in the closed state. As a regards the actuator circuit 5, the solenoid switch valves 7 and 8 are held in a no-power-applying state. The solenoid switch valves 7 and 8 are held in the check position by the springs 7b and 8b, respectively. Hence, the actuator A is set in a locked state where elongation and contraction are prevented, and therefore the vehicle body tilting device functions as an inhibiting cylinder that prevents the vehicle body from tilting.

### (2) When vehicle body tilting is required

When the vehicle traveling speed reaches or exceeds 50km/hr, for example, and the railway vehicle passes a curve having an insufficient cant, the vehicle body must be tilted.

In the damping and locking circuit 13 in this case, the solenoid switch valve 18 is supplied with power to switch the solenoid switch valve 18 to the check position. As a result of this operation, the shutoff valve 16 is fixed in the closed position such that the flow of working oil between the pressure chambers R1 and R2 of the actuator A via the damping and locking circuit 13 is blocked. In the actuator circuit 5, the solenoid switch valves 7 and 8 are supplied with power such that both solenoid switch valves 7 and 8 are switched to the communicating position. Further, the hydraulic pump 1 is operated in accordance with a required vehicle body tilting direction.

As a result of the above operations, the piston 3 displaces in the axial direction within the actuator A, and the pendulum beam D is tilted relative to the bogie W via the piston rod 4. In other words, the vehicle body tilting device functions as an actuator that tilts the vehicle body B relative to the bogie W.

Oil pressure for driving the actuator A flows directly between the actuator circuit 5 and the pressure chambers R1 and R2 of the actuator A, without passing through the damping and locking circuit 13. Hence, the damping and locking circuit 13 does not interfere with the actuator circuit 5, and during elongation and contraction of the actuator A, energy loss due to the working oil entering the damping and locking circuit 13 does not occur.

### (3) When the vehicle body tilting device fails

The vehicle body tilting device requires a damper function for allowing the vehicle body B to tilt but suppressing dramatic tilting of the vehicle body B when power supply to the vehicle body tilting device becomes impossible during railway vehicle travel.

In the damping and locking circuit 13 in this case, the solenoid switch valve 18 is maintained in the communicating position by an elastic force of the spring 18b. The solenoid switch valve 19 holds the communicating position switched to at the beginning of the operation of the railway vehicle. Hence, the shutoff valve 16 can be opened in accordance with the upstream pressure.

In the actuator circuit 5, the solenoid switch valves 7 and 8 are not supplied with power, and therefore the solenoid switch valves 7 and 8 are held in the check position. Moreover, the hydraulic pump 1 is not operated. Therefore, working oil does not flow between the actuator circuit 5 and the actuator A, and the actuator circuit 5 does not interfere with the operation of the damping and locking circuit 13.

When the railway vehicle passes a curve having a cant in the above state, centrifugal force acts on the vehicle in an outside direction of the curve. A center of gravity of the vehicle body is positioned lower than a center of curvature of the pendulum beam D, and therefore the centrifugal force acts as a force that causes the vehicle body B to tilt toward the inside of the curve. Hence, when the vehicle body B tilts relative to the bogie W, the piston 3 slides within the cylinder 2 such that the pressure in the pressure chamber R1 and the pressure in the pressure chamber R2 become unbalanced. As a result of this operation, working oil flows between the pressure chambers R1 and R2 via the damping and locking circuit 13.

More specifically, when the vehicle body B is tilted in the counterclockwise direction of FIG. 1 by the centrifugal force, the piston 3 displaces to the pressure chamber R2 side such that a part of the working oil in the pressure chamber R2 flows into the pressure chamber R1 via the flow passage 14c, the check valve 21, the shutoff valve 16, the main flow passage 14a, the orifice 15b, the check valve 22, and the flow passage 14b. During this process, the orifice 15b generates a damping force based on the flow resistance, and therefore the vehicle body tilting device functions as a damper that damps the tilting of the vehicle body generated by the centrifugal force. When the flow rate through the orifice 15b reaches or exceeds a fixed level, the flow resistance of the orifice 15b reaches a maximum. In this case, the damping valve 15 opens, whereby working oil is caused to flow into the pressure chamber R1 from the main flow passage 14a via the flow passage 14d and the flow passage 14b by a damping force based on the flow resistance of the damping valve 15.

When the vehicle body B is tilted in the clockwise direction of FIG. 1 by the centrifugal force, the piston 3 displaces to the pressure chamber R1 side such that a part of the working oil in the pressure chamber R1 flows into the pressure chamber R2 via the flow passage 14b, the check valve 20, the shutoff valve 16, the main flow passage 14a, the orifice 15b, the check valve 23, and the flow passage 14c. During this process, the orifice 15b generates a damping force based on the flow resistance, and therefore the vehicle body tilting device functions as a damper that damps the tilting of the vehicle body generated by the centrifugal force. When the flow rate through the orifice 15b reaches or exceeds a fixed level, the flow resistance of the orifice 15b reaches a maximum. In this case, the damping valve 15 opens, whereby working oil is caused to flow into the pressure chamber R2 from the main flow passage 14a via the flow passage 14e and the flow passage 14c while generating a damping force based on the flow resistance of the damping valve 15.

Hence, when the vehicle body tilting device fails during travel, the vehicle body tilting device functions as a damper that allows the vehicle body B to tilt in the center of curvature direction of the curve but prevents the vehicle body B from tilting rapidly.

In other words, when power is not supplied, the vehicle body tilting device functions as an inhibiting cylinder in a case where the railway vehicle is inoperative, and functions as a damper in a case where the vehicle body tilting device fails. Hence, the single actuator A can be used as an actuator, a damper, and an inhibiting cylinder, depending on conditions.

Therefore, the vehicle body tilting device can be reduced in size, and as a result, the entire hydraulic vehicle body tilting device, including the hydraulic pump 1, the electric motor, and the actuator A, can be housed in the narrow space between the vehicle body B and the bogie W. Moreover, the single actuator A can be used as an actuator, a damper, and an inhibiting cylinder, depending on conditions, and therefore the manufacturing cost of the vehicle body tilting device can be reduced.

When applied to a railway vehicle that travels on snow-covered ground, this small vehicle body tilting device can be accommodated within the pendulum beam. Therefore, operational defects in the vehicle body tilting device caused by snow and ice sticking to the device can be avoided.

Moreover, since the vehicle body tilting device uses oil pressure, greater thrust and improved responsiveness can be obtained in comparison with a conventional vehicle body tilting device that uses air pressure. As a result, passenger comfort in the railway vehicle can be improved.

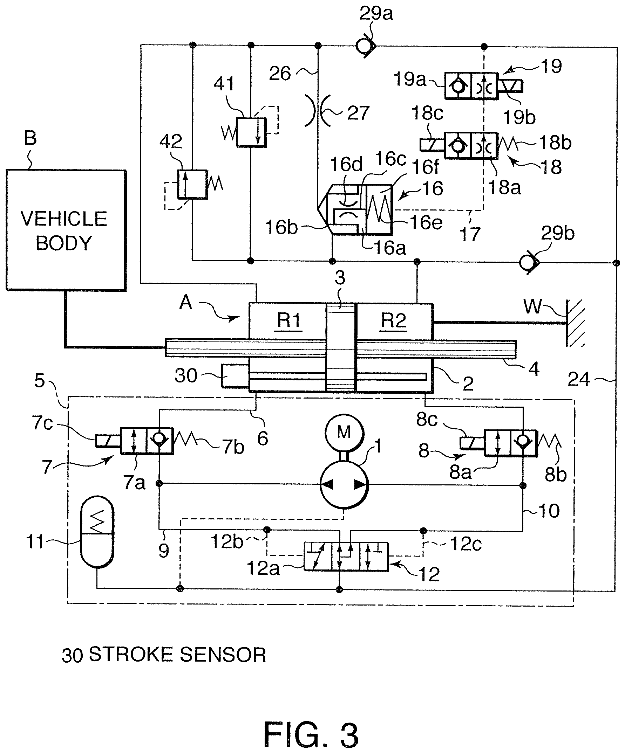

Referring to FIG. 3, a second embodiment of this invention will be described.

This embodiment differs from the first embodiment in the constitution of the damping and locking circuit 13. In this embodiment, damping force is generated by an orifice 27 alone instead of the damping valve 15 and the orifice 15b. The orifice 27 is provided in a flow passage 26 in series with the shutoff valve 16. One end of the flow passage 26 is connected to the pressure chamber R1, and the other end of the flow passage 26 is connected to the pressure chamber R2.

The connecting passage 24 extending from the accumulator 11 is connected to the pressure chamber R1 via a check valve 29a. The connecting passage 24 extending from the accumulator 11 is connected to the pressure chamber R2 via a check valve 29b.

Parallel relief valves 41 and 42 are connected to the pressure chambers R1 and R2 via a flow passage 26. When the pressure of the pressure chamber R1 becomes abnormally high, the relief valve 41 allows working oil to escape from the pressure chamber R1 into the pressure chamber R2 through the flow passage 26. When the pressure of the pressure chamber R2 becomes abnormally high, the relief valve 42 allows working oil to escape from the pressure chamber R2 into the pressure chamber R1 through the flow passage 26.

According to this embodiment, similar effects to the first embodiment are obtained, and in addition, the constitution of the damping and locking circuit 13 can be simplified.

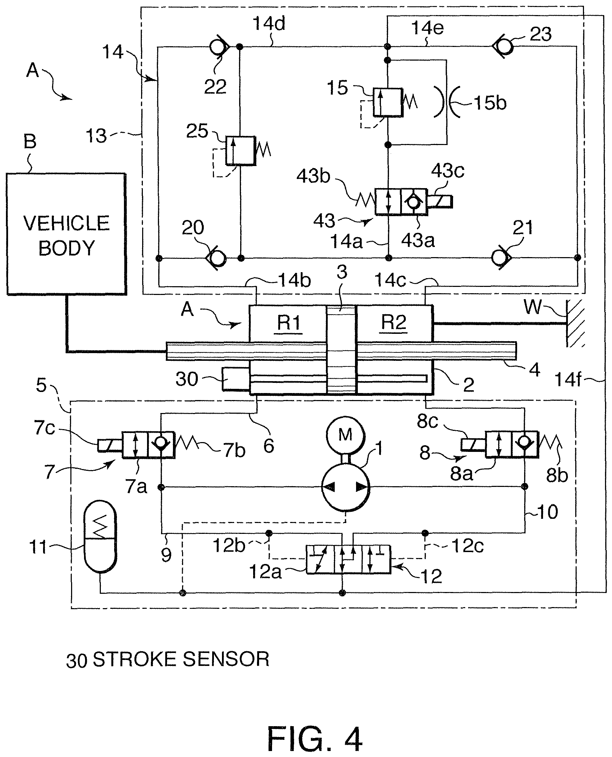

Referring to FIG. 4, a third embodiment of this invention will be described.

This embodiment differs from the first embodiment in the constitution of the damping and locking circuit 13. Furthermore, an axial piston pump is used as the hydraulic pump 1. All other constitutions of the actuator circuit 5 are identical to those of the first embodiment.

With regard to the damping and locking circuit 13, in this embodiment, a normally open solenoid switch valve 43 is used in place of the shutoff valve 16 and the solenoid switch valves 18 and 19 of the first embodiment. All other constitutions of the damping and locking circuit 13 are identical to those of the first embodiment.

The solenoid switch valve 43 includes a valve main body 43a having a communicating position in which working oil is permitted to flow in both directions of the main flow passage 14a, and a check position in which working oil is prevented from flowing from the main flow passage 14a in the direction of the orifice 15b but allowed to flow in reverse. The solenoid switch valve 43 also includes a spring 43b that biases the valve main body 43a toward the communicating position, and a solenoid 43c that switches the valve main body 43a to the check position against the spring 43b through excitation.

When not excited, the solenoid switch valve 43 is held in the communicating position by an elastic force of the spring 43b. In this state, the actuator A elongates and contracts under the damping force generated by the orifice 15b and damping valve 15, whereby the vehicle body tilting device functions as a damper.

When the railway vehicle does not require vehicle body tilting, i.e. when the traveling speed is lower than the predetermined speed or when the traveling speed is equal to or higher than the predetermined speed but the railway vehicle is traveling in a straight line or along a gentle curve, the solenoid switch valve 43 is switched to the check position by exciting the solenoid 43c. As a result, working oil is prevented from flowing out of the oil chambers R1 and R2 of the actuator A by the solenoid switch valve 43. In the actuator circuit 5, the hydraulic pump 1 is not driven, and therefore the solenoid switch valves 7 and 8 are held in the check position. Hence, elongation/contraction of the actuator A is locked, and the vehicle body tilting device functions as an inhibiting cylinder.

On the other hand, when the railway vehicle requires vehicle body tilting, i.e. when the vehicle traveling speed is equal to or greater than the predetermined speed and the railway vehicle passes a curve having an insufficient cant, the solenoid switch valve 43 is held in the check position and the solenoids 7c and 8c of the solenoid switch valves 7 and 8 of the actuator circuit 5 are excited to switch the solenoid switch valves 7 and 8 to the communicating position. The electric motor M is supplied with power so as to operate the hydraulic pump 1. In the damping and locking circuit 13, the solenoid switch valve 43 is in the check position, and therefore working oil is prevented from flowing out of the pressure chambers R1 and R2 of the actuator A via the damping and locking circuit 13. Hence, the actuator A is driven to elongate and contract by the oil discharged from the hydraulic pump 1, and the vehicle body tilting device functions as an actuator for tilting the vehicle body B relative to the bogie W.

When power supply to the vehicle body tilting device becomes impossible while the railway vehicle is traveling, the solenoid switch valve 43 of the damping and locking circuit 13 is held in the communicating position by the elastic force of the spring 43b. Meanwhile, the solenoid switch valves 7 and 8 of the actuator circuit 5 are held in the check position by the elastic force of the springs 7b and 8b. As a result, the working oil in the pressure chambers R1 and R2 of the actuator A becomes capable of flowing bidirectionally while generating damping force relative to the external force applied to the actuator A via the orifice 15b and the damping valve 15, and thus the vehicle body tilting device functions as a damper. The vehicle body tilting device functions similarly as a damper both when the railway vehicle is inoperative and when the vehicle body tilting device fails.

The difference between this embodiment and the first and second embodiments is in the response exhibited when the railway vehicle is inoperative. In the first and second embodiments, the vehicle body tilting device functions as an inhibiting cylinder when the railway vehicle is inoperative and as a damper when the vehicle body tilting device fails. In this embodiment, however, the vehicle body tilting device functions as a damper in both cases. Hence, according to this invention, the function of the vehicle body tilting device when the railway vehicle is inoperative can be set as desired by varying the constitution of the damping and locking circuit 13.

Meanwhile, by using an axial piston pump as the hydraulic pump 1, the following effects are obtained.

An axial piston pump is a well-known pump having the following specific constitution. An axial piston pump includes a cylinder block that is housed in a housing to be free to rotate and is driven to rotate by an electric motor M, an odd number of cylinder holes formed in the cylinder block at equal intervals on an identical circumference, a piston inserted into each cylinder hole to be free to slide, a piston shoe that supports one end of each piston via a ball joint, a swash plate that slides along the piston shoe so as to tilt the piston shoe relative to an axis of the cylinder block, and a valve plate that contacts an end surface of the cylinder block so as to be free to slide and forms an intake port and a discharge port. The axial piston pump is capable of bidirectional discharge in accordance with a rotation direction of the electric motor M. Further, a discharge flow rate is varied in accordance with a rotation speed of the electric motor M. The swash plate may be a fixed angle type or a variable angle type.

In accordance with rotation of the axial piston pump, the piston shoe is pushed toward the swash plate by pressure generated in the cylinder and the cylinder block is urged toward the valve plate. As a result, a frictional force against the rotation of the cylinder block is generated between the piston shoe and the swash plate and between the cylinder block and the valve plate. In contrast to a pressure loading gear pump or a pressure balance gear pump, the frictional force does not increase, and when the axial piston pump is driven to rotate, the torque required thereby is not as large as that of a pressure loading gear pump or a pressure balance gear pump. A feature of an axial piston pump is that it can be driven to rotate by a smaller external input than a gear pump.

The axial piston pump constituting the hydraulic pump 1 generates a smaller frictional resistance force relative to rotational driving than a gear pump, and can be rotated by a smaller torque. Therefore, when torque equal to or greater than an output of the electric motor M is input externally, the actuator A can be caused to elongate and contract more easily, whereby the

actuator A can be caused to elongate and contract more easily, whereby the apparent rigidity of the actuator A decreases in comparison with a conventional actuator.

When the vehicle body tilting device is used as an actuator, the solenoid switch valve 43 is held in the check position by electrifying the solenoid 43c. Therefore, working fluid does not pass through the damping and locking circuit 13, and the damper function generated by the damping and locking circuit 13 is not activated. According to this embodiment, however, when torque equal to or greater than the output of the electric motor M is input externally, the actuator A elongates and contracts under a damping force based on the frictional resistance force of the hydraulic pump 1. Therefore, the vehicle body tilting device can function as a damper while also functioning as an actuator. Hence, according to this embodiment, vibration and impacts input into the actuator A externally can be absorbed while the vehicle body B is tilted relative to the bogie W. According to this embodiment, sufficient thrust and responsiveness can be generated by the hydraulic vehicle body tilting device, and vibration and impacts can be absorbed while the vehicle body B is tilted. Therefore, a favorable effect in terms of improving the passenger comfort of the railway vehicle is obtained.

Although the invention has been described above with reference to certain embodiments, the invention is not limited to the embodiments described above. Modifications and variations of the embodiments described above will occur to those skilled on the art, within the scope of the appended claims.

For example, in each of the above embodiments, this invention is applied to a railway vehicle having a vehicle body that is tilted using a so-called pendulum structure, but this invention may also be applied to a railway vehicle in which left and right actuators are interposed between the vehicle body B and the bogie W in a vertical orientation and the vehicle body B is tilted by causing these actuators to elongate and contract.

Further, the driving medium of the actuator A is not limited to working oil, and any other incompressible fluid may be used.

### INDUSTRIAL FIELD OF APPLICATION

As described above, with the vehicle body tilting device according to this invention, a vehicle can be tilted with sufficient thrust and responsiveness using a single hydraulic actuator, and the actuator can be caused to function as a damper relative to the action of an external force. Therefore, the hydraulic vehicle body tilting device can be reduced in size, and as a result of this size reduction, the vehicle body tilting device can be housed in a pendulum beam between a vehicle body and a bogie of a railway vehicle. Hence, by applying the vehicle body tilting device according to this invention to a railway vehicle used in a cold region, operational defects in the vehicle body tilting device caused by snow and ice sticking thereto can be prevented.

## Claims

1. A vehicle body tilting device for a railway vehicle, comprising:
a telescopic hydraulic actuator (A) interposed between a vehicle body (D) and a bogie (W) of the railway vehicle and comprising a cylinder (2), a piston (3) housed in the cylinder (2) to be free to slide, a piston rod (4) that is joined to the piston (3) and projects outward from the cylinder (2), and two pressure chambers (R1, R2) defined in the cylinder (2) by the piston (3),
an actuator circuit (5) that drives the hydraulic actuator (A) to elongate and contract; and
a damping and locking circuit (13) that damps elongation/contraction of the hydraulic actuator (A) caused by an external force and includes a shutoff mechanism (17, 18, 19, 43) that shuts off a flow of working fluid accompanying the elongation/contraction of the hydraulic actuator (A) caused by the external force, the damping and locking circuit (13) comprising a flow passage (14a, 14b, 14c, 14d, 14e, 26) that connects the two pressure chambers (R1, R2), a shutoff valve (16, 43) that shuts off a predetermined direction flow of the flow passage (14a, 14b, 14c, 14d, 14e, 26) when operated, and a damping force generating element (15, 15b, 27) that applies a resistance to fluid flowing through the shutoff valve (16, 43) in an open state,
**characterized in that**
the shutoff valve (16, 43) comprises a valve seat (16b), a valve body (16a) that sits on the valve seat (16b), a spring (16e) that biases the valve body (16a) toward the valve seat (16b), and a back pressure chamber (16f) that applies a back pressure to the valve body (16a),
the valve body (16a) is configured to shut off the flow of working fluid through the flow passage (14a, 14b, 14c, 14d, 14e, 26) when seated on the valve seat (16b) and separate from the valve seat (16b), when the back pressure in the back pressure chamber (16f) is released, in accordance with a pressure in a high pressure side pressure chamber of the two pressure chambers (R1, R2) to allow working fluid to flow through the flow passage (14a, 14b, 14c, 14d, 14e, 26), and
the shutoff mechanism (17, 18, 19, 43) comprises a drain passage (17) that releases the back pressure in the back pressure chamber (16f), and a solenoid switch valve (18, 19) that shuts off the drain passage (17).

2. The vehicle body tilting device for a railway vehicle as defined in Claim 1, **characterized in that** the solenoid switch valve (18, 19) is constituted by a normally open solenoid switch valve (18) that sets the drain passage (17) in a shutoff state when excited, and a self-holding solenoid two-position switch valve (19) that is disposed in series with the normally open solenoid switch valve (18) and sets the drain passage (17) in the shutoff state or a communicating state when excited.

3. The vehicle body tilting device for a railway vehicle as defined in Claim 1, **characterized in that** the shutoff valve (16, 43) is constituted by a solenoid switch valve (43) that shuts off a predetermined direction flow of working fluid through a flow passage (26) when excited.

4. The vehicle body tilting device for a railway vehicle as defined in any one of Claims 1, 2 and 3, **characterized in that** the damping force generating element (15, 15b, 27) comprises an orifice (15b) and a damping valve (15) disposed parallel to the orifice (15b).

5. The vehicle body tilting device for a railway vehicle as defined in any one of Claims 1, 2 and 3, **characterized in that** the damping force generating element (15, 15b, 27) is constituted by an orifice (27) provided in the flow passage (26) connecting the two pressure chambers (R1, R2).

6. The vehicle body tilting device for a railway vehicle as defined in any one of Claims 1, 2-5, **characterized by** an accumulator (11) that stores fluid which flows out of either of the two pressure chambers (R1, R2) via the damping and locking circuit (13) and supplies fluid to the pressure chamber (R1, R2) that has decreased in pressure via the damping and locking circuit (13).

7. The vehicle body tilting device for a railway vehicle as defined in Claim 1, **characterized in that** the actuator circuit (5) comprises two passages (9, 10) connected respectively to the two pressure chambers (R1, R2), a bidirectional discharge hydraulic pump (1) that suctions working fluid from one of the two passages (9, 10) and discharges the suctioned working fluid to the other of the two passages (9, 10), and a solenoid switch valve (7, 8) provided in each of the two passages (9, 10), which prevents working fluid from flowing out of the two pressure chambers (R1, R2) when excited.

8. The vehicle body tilting device for a railway vehicle as defined in Claim 7, **characterized in that** the hydraulic pump (1) is constituted by an axial piston pump.

## Patentansprüche

1. Eine Fahrzeugkörper-Kippvorrichtung für ein Schienenfahrzeug, aufweisend:
einen teleskopischen Hydraulikaktuator (A), der zwischen einen Fahrzeugkörper (D) und einem Fahrgestell (W) des Schienenfahrzeugs gesetzt ist und aufweisend einen Zylinder (2), einen Kolben (3) untergebracht in dem Zylinder (2) um frei zu gleiten, eine Kolben-stange (4) die mit dem Kolben verbunden ist und nach außen von dem Zylinder (2) vorsteht, und zwei Druckkammern (R1, R2) die in dem Zylinder (2) mittels des Kolbens (3) definiert sind, einen Betätigungskreislauf (5) der den Hydraulikaktuator (A) zum Ausfahren und zum Einfahren betätigt; und
einen Dämpfungs- und Verriegelungskreislauf (13), der das Ausfahren/Einfahren des Hydraulikaktuators (A) dämpft, bewirkt durch eine externe Kraft und ein Ausschaltmechanismus (17, 18, 19, 43) aufweist, der ein Fluss von Arbeitsfluid abschaltet begleitend das Ausfahren/Einfahren des Hydraulikaktuators (A) bewirkt durch die externe Kraft, der Dämpfungs- und Verriegelungskreislauf (13) weist eine Fließpassage (14a, 14b, 14c, 14d, 14e, 26) auf, die die zwei Druckkammern (R1, R2) verbindet, ein Ausschaltventil (16, 43), das einen vorbestimmten Richtungsfluss der Fließpassage (14a, 14b, 14c, 14d, 14e, 26) ausschaltet, wenn es betätigt ist, und ein Dämpfungskraftgenerierungselement (15, 15b, 27), das einen Widerstand zur Flüssigkeit ausübt die durch das Ausschaltventil (16, 43) in einem geöffneten Zustand fließt,
**dadurch gekennzeichnet, dass**
das Ausschaltventil (16, 43) ein Ventilsitz (16b), ein Ventilkörper (16a) der an dem Ventilsitz (16b) sitzt, eine Feder (16e) die den Ventilkörper (16a) zum Ventilsitz (16b) hin spannt, und eine Gegendruckkammer (16f) aufweist, die einen Gegendruck zu dem Ventilkörper (16a) ausübt,
der Ventilkörper (16a) ist konfiguriert, um den Fluss des Arbeitsfluids durch die Fließpassage (14a, 14b, 14c, 14d, 14e, 26) abzuschalten, wenn dieser an dem Ventilsitz (16b) sitzt und sich von dem Ventilsitz (16b) zu trennen, wenn der Gegendruck in der Gegendruckkammer (16f) freigegeben wird, in Übereinstimmung mit einem Druck in einer Hochdruck-seitendruckkammer der zwei Druckkammern (R1, R2), um ein Fließen das Arbeitsfluids durch die Fließpassage (14a, 14b, 14c, 14d, 14e, 26) zu gestatten, und
der Ausschaltmechanismus (17, 18, 19, 43) weist eine Ablaufpassage (17) auf, die den Gegendruck in der Gegendruckkammer (16f) freigibt, und ein Solenoid-Schaltventil (18, 19), das die Ablaufpassage (17) abschaltet.

2. Die Fahrzeugkörper-Kippvorrichtung für ein Schienenfahrzeug wie in Anspruch 1 definiert, **dadurch gekennzeichnet, dass** das Solenoid-Schaltventil (18, 19) mittels eines normalen offenen Solenoid-Schaltventils (18) konstituiert ist, das die Ablaufpassage (17) in einen geschlossenen Zustand versetzt, wenn es eingeschalten ist, und ein selbsthaltendes Solenoid-Zweipositionen-Schaltventil (19) ist in Reihe gesetzt mit dem normalen offenen Solenoid-Schaltventil (18) und es versetzt die Ablaufpassage (17) in den geschlossenen Zustand oder in einen kommunizierenden Zustand, wenn es eingeschalten ist.

3. Die Fahrzeugkörper-Kippvorrichtung für ein Schienenfahrzeug wie in Anspruch 1 definiert, **dadurch gekennzeichnet, dass** das Ausschaltventil (16, 43) mittels eines Solenoid-Schaltventils (43) konstituiert ist, das einen vorbestimmten Richtungsfluss von Arbeitsfluid durch eine Fließpassage (26) abschaltet, wenn es eingeschalten ist.

4. Die Fahrzeugkörper-Kippvorrichtung für ein Schienenfahrzeug wie in einem der Ansprüche 1, 2 und 3 definiert, **dadurch gekennzeichnet, dass** das Dämpfungskraftgenerierungs-element (15, 15b, 27) eine Verengung (15b) und ein Dämpfungsventil (15) aufweist, die parallel zur Verengung (15b) vorgesehen sind.

5. Die Fahrzeugkörper-Kippvorrichtung für ein Schienenfahrzeug wie in einem der Ansprüche 1, 2 und 3 definiert, **dadurch gekennzeichnet, dass** das Dämpfungskraftgenerierungs-element (15, 15b, 27) mittels einer Verengung (27) konstituiert ist, die in der Fließpassage (26) bereitgestellt ist, die die zwei Druckkammern (R1, R2) verbindet.

6. Die Fahrzeugkörper-Kippvorrichtung für ein Schienenfahrzeug wie in einem der Ansprüche 1, 2 bis 5 definiert, **dadurch gekennzeichnet, dass** ein Speicher (11) ein Fluid speichert, das aus einer der zwei Druckkammern (R1, R2) über den Dämpfungs- und Verriegelungs-kreislauf (13) ausfließt und Fluid zu der Druckkammer (R1, R2) liefert, die im Druck über den Dämpfungs- und Verriegelungskreislauf (13) verringert wurde.

7. Die Fahrzeugkörper-Kippvorrichtung für ein Schienenfahrzeug wie in Anspruch 1 definiert, **dadurch gekennzeichnet, dass** der Betätigungskreislauf (5) zwei Passen (9, 10) aufweist, die mit den zwei Druckkammern (R1, R2) entsprechend verbunden sind, eine hydraulische Zweirichtungs-Ausgabepumpe (1), die Arbeitsfluid von einem der zwei Passagen (9, 10) ansaugt und das eingesaugte Arbeitsfluid zu der anderen der zwei Passagen (9, 10) abgibt, ein Solenoid-Schaltventil (7, 8), das in jeder der zwei Passagen (9, 10) bereitgestellt ist, welches ein Ausfließen von Arbeitsfluid von den zwei Druckkammern (R1, R2) vermeidet, wenn es eingeschalten ist.

8. Die Fahrzeugkörper-Kippvorrichtung für ein Schienenfahrzeug wie in Anspruch 7 definiert, **dadurch gekennzeichnet, dass** die hydraulische Pumpe (1) mittels einer axialen Kolbenpumpe konstituiert ist.

## Revendications

1. Dispositif d'inclinaison de carrosserie de véhicule pour un véhicule ferroviaire, comprenant :
un actionneur hydraulique télescopique (A) interposé entre une carrosserie de véhicule (D) et un bogie (W) du véhicule ferroviaire, et comprenant un cylindre (2), un piston (3) installé dans le cylindre (2) et libre de coulisser, une bielle de piston (4) qui est relié au piston (3) et qui fait saillie vers l'extérieur du cylindre (2), et deux chambres de pression (R1, R2) définies dans le cylindre (2) par le piston (3),
un circuit actionneur (5) qui entraîne l'actionneur hydraulique (A) pour l'étendre et le rétracter ; et
un circuit d'amortissement et de verrouillage (13) qui amortit l'extension/la rétraction de l'actionneur hydraulique (A) engendrée par une force extérieure, et qui comprend un mécanisme d'arrêt (17, 18, 19, 43) qui arrête un flux de fluide actif accompagnant l'extension/la rétraction de l'actionneur hydraulique (A) engendrée par la force extérieure, le circuit d'amortissement et de verrouillage (13) comprenant un conduit d'écoulement (14a, 14b, 14c, 14d, 14e, 26) qui relie les deux chambres de pression (R1, R2), une vanne d'arrêt (16, 43) qui arrête un flux de direction prédéterminée du conduit d'écoulement (14a, 14b, 14c, 14d, 14e, 26) lorsqu'elle est actionnée, et un élément générateur de force d'amortissement (15, 15b, 27) qui applique une résistance au fluide s'écoulant à travers la vanne d'arrêt (16, 43) étant dans un état ouvert,
**caractérisé en, ce que**
la vanne d'arrêt (16, 43) comprend un siège de vanne (16b), un corps de vanne (16a) qui s'appuie sur le siège de vanne (16b), un ressort (16e) qui incline le corps de vanne (16a) vers le siège de vanne (16b), et une chambre de contre-pression (16f) qui applique une contre-pression sur le corps de vanne (16a),
le corps de vanne (16a) est configuré pour arrêter le flux du fluide actif à travers le conduit d'écoulement (14a, 14b, 14c, 14d, 14e, 26) lorsqu'il s'appuie sur le siège de vanne (16b) et séparé du siège de vanne, et pour permettre au fluide actif de s'écouler à travers le conduit d'écoulement (14a, 14b, 14c, 14d, 14e, 26) lorsqu'il est séparé du siège de vanne (16b), lorsque la contre-pression exercée dans la chambre de contre-pression (16f) est relâchée, en fonction d'une pression exercé dans une chambre de haute pression annexe comptant parmi les deux chambres de pression (R1, R2), et
le mécanisme d'arrêt (17, 18, 19, 43) comprend un conduit d'évacuation (17) qui libère la contre-pression exercée dans la chambre de contre-pression (16f), et une électrovanne (18, 19) qui ferme le conduit d'évacuation (17).

2. Dispositif d'inclinaison de carrosserie de véhicule destiné à un véhicule ferroviaire, tel que défini à la revendication 1, **caractérisé en ce que** l'électrovanne (18, 19) est constituée d'une vanne solénoïde normalement ouverte (18) qui active l'état fermé du conduit d'évacuation (17) lorsqu'elle est excitée, et d'une vanne solénoïde à deux positions auto-maintenue (19) montée en série avec la vanne solénoïde normalement ouverte (18) et qui active l'état fermé ou un état communiquant du conduit d'évacuation (17) lorsqu'elle est excitée.

3. Dispositif d'inclinaison de carrosserie de véhicule destiné à un véhicule ferroviaire, tel que défini à la revendication 1, **caractérisé en ce que** la vanne d'arrêt (16, 43) est constituée d'une vanne solénoïde (43) qui arrête un flux de direction prédéterminée du fluide actif à travers un conduit d'écoulement (26) lorsqu'elle est excitée.

4. Dispositif d'inclinaison de carrosserie de véhicule destiné à un véhicule ferroviaire, tel que défini dans l'une quelconque des revendications 1, 2 et 3, **caractérisé en ce que** l'élément générateur de force d'amortissement (15, 15b, 27) comprend un orifice (15b) et une vanne d'amortissement (15) montée en parallèle avec ledit orifice (15b).

5. Dispositif d'inclinaison de carrosserie de véhicule destiné à un véhicule ferroviaire, tel que défini dans l'une quelconque des revendications 1, 2 et 3, **caractérisé en ce que** l'élément générateur de force d'amortissement (15, 15b, 27) est constitué d'un orifice (27) installé dans le conduit d'écoulement (26) reliant les deux chambres de pression (R1, R2).

6. Dispositif d'inclinaison de carrosserie de véhicule destiné à un véhicule ferroviaire, tel que défini dans l'une quelconque des revendications 1, et 2 à 5, **caractérisé par** un accumulateur (11) qui stocke le fluide qui s'écoule hors d'une des deux chambres de pression (R1, R2) par le circuit d'amortissement et de verrouillage (13) et qui alimente en fluide la chambre de pression (R1, R2) dont la pression a diminué par le circuit d'amortissement et de verrouillage (13).

7. Dispositif d'inclinaison de carrosserie de véhicule destiné à un véhicule ferroviaire, tel que défini dans la revendication 1, **caractérisé en ce que** le circuit actionneur (5) comprend deux conduits (9, 10) raccordés respectivement aux deux chambres de pression (R1, R2), une pompe hydraulique de décharge bidirectionnelle (I) qui aspire le fluide actif dans un des deux conduits (9, 10) et qui décharge le fluide actif dans l'autre des deux conduits (9, 10), et une électrovanne (7, 8) placée dans chacun des deux conduits (9, 10), qui empêche le fluide actif de s'écouler hors des deux chambres de pression (R1, R2) lorsqu'elle est excitée.

8. Dispositif d'inclinaison de carrosserie de véhicule destiné à un véhicule ferroviaire, tel que défini dans la revendication 7, **caractérisé en ce que** la pompe hydraulique (1) est constituée d'une pompe à piston axial.
